# EUROPÄISCHE PATENTSCHRIFT

(11) **EP 0 533 118 B1**
(45) Veröffentlichungstag und Bekanntmachung des Hinweises auf die Patenterteilung: **12.04.1995**
(21) Anmeldenummer: 92115786.3
(22) Anmeldetag: 16.09.1992
(51) Int. Cl.: B62D 25/10, B60R 13/08, B60K 11/08

(54) **Erdbewegungsmaschine, insbesondere Radlader**
Earth moving machine, in particular wheel loader
Engin de terrassement, notamment chargeur à roues

(30) Priorität: 20.09.1991 DE 4131294; 20.09.1991 DE 4131293
(43) Veröffentlichungstag der Anmeldung: 24.03.1993
(73) Patentinhaber: O & K ORENSTEIN & KOPPEL AG, 13581 Berlin (DE)
(72) Erfinder: Fengler, Georg, W-4709 Bergkamen-Oberaden (DE); Irrgang, Jürgen, W-4600 Dortmund-Brechten (DE)

(56) Entgegenhaltungen:
- EP-A- 0 074 941
- EP-A- 0 490 885
- WO-A-88/06230
- DE-A- 2 340 497
- FR-A- 2 240 858
- GB-A- 2 203 107
- US-A- 4 071 009

## Beschreibung

Die Erfindung betrifft eine Erdbewegungsmaschine, insbesondere Radlader, mit einem Antriebsaggregat, das von einer zumindest teilweise zu öffnenden, durch mehrere Begrenzungswände gebildeten Kapsel umgeben ist, in deren innerem Bereich mindestens eine kanalartig ausgebildete schallgedämpfte Luftzuführeinrichtung sowie mindestens eine ebenfalls kanalartig ausgebildete schallgedämpfte Abluftführung vorgesehen ist.

Die EP-A 31 131 betrifft ein Nutzfahrzeug mit einer im wesentlichen innerhalb der Umrisse des Fahrerhauses angeordneten Kapsel zur Aufnahme eines Antriebsaggregates, die an ihrer Frontseite eine Lufteinlaß- und an ihrer Rückseite eine Luftauslaßöffnung aufweist, wobei innerhalb der Lufteinlaßöffnung die Kühleinrichtung des Antriebsaggregates angeordnet ist. Die Kapsel ist bis auf die Ein- und Auslaßöffnung als ein geschlossenes Gehäuse ausgebildet. Die Ein- und Auslaßöffnung sind durch je eine als Absorptionskanal ausgebildete Absorptionsstrecke abgedeckt, wobei sich die Absorptionskanäle in Fahrzeuglängsrichtung erstrecken. Die rückwärtige Absorptionsstrecke wird von zwei in Fahrzeuglängsrichtung versetzt zueinander verlaufenden und sich teilweise überlappenden Querwänden gebildet, wobei der Abstand der beiden Wände in ihrem überlappenden Bereich den Querschnitt der Luftauslaßöffnung bestimmt. Die vordere Absorptionsstrecke wird durch einen etwa in der Ebene der Frontwand im wesentlichen parallel zu dieser verlaufenden Schallabsorptionsschacht gebildet, dessen Lufteinströmöffnungen versetzt zur Einlaßöffnung der Kapsel angeordnet sind. Die Nachteile der Kapselung sind im wesentlichen darin begründet, daß insbesondere bei der Auslaßöffnung die Umleitung dergestalt erfolgt, daß der Schall dergestalt austritt, daß die Geräuschreduzierung nicht als optimal angesehen werden kann.

Die DE-C 39 02 658 betrifft eine Motorhaube, insbesondere für Nutzfahrzeuge, die zur Führung der Motoransaugluft hohl ausgebildet ist. Der sich im wesentlichen über ganze Länge und Breite der Motorhaube erstreckende Haubenhohlraum ist durch Schottwände in wenigstens zwei Längskanäle unterteilt, von denen nur der eine in an sich bekannter Weise zur Führung der Motoransaugluft dient, wogegen der andere zu einer in ihm eingebauten, aus Gebläse und Wärmetauscher bestehenden, Heiz- bzw. Kühleinrichtung für den Innenraum des Fahrerhauses führt und eine weiterer Längskanal elektrische Kabel aufnimmt.

Dieser Druckschrift ist lediglich zu entnehmen, eine Motorhaube mehrkanalig auszuführen, ohne daß schalldämmende Maßnahmen vorgesehen sind, die zu einer Geräuschreduzierung führen.

Ziel des Erfindungsgegenstandes ist es, eine Erdbewegungsmaschine, insbesondere einen Radlader, gemäß gattungsbildendem Teil des ersten Patentanspruches dahingehend weiterzubilden, daß die Geräuschbelästigung durch die Antriebsaggregate für die Umwelt gemindert werden, zumindest jedoch auf einen Stand abgesenkt werden, der in anerkannter Weise als umweltfreundlich angesehen werden kann.

Dieses Ziel wird erfindungsgemäß dadurch erreicht, daß
- das im rückwärtigen Bereich der Erdbewegungsmaschine vorgesehene Antriebsaggregat durch eine Motorraumabdeckung abgeschlossen ist,
- die die Luftzuführeinrichtung bildende deckenseitige Begrenzungswand der Motorraumabdeckung zum Motorraum hin doppelwandig ausgeführt ist, und
- der die Kapsel unten abschließende Motorraumboden aus mindestens zwei sich mindestens teilweise überlappenden, etwa horizontal verlaufenden Abschnitten gebildet ist, wobei die Austrittsöffnung der Abluftführung unterhalb des Antriebsaggregates, in Fahrtrichtung der Erdbewegungsmaschine gesehen, nach vorne und/oder motorbodenseitig nach unten vorgesehen ist.

Vorteilhafte Weiterbildungen des Erfindungsgegenstandes sind den Unteransprüchen zu entnehmen.

Der Raum zwischen den Abdeckungswänden als Luftführung zum Motorraum ist schallgedämpft ausgeführt. Dies kann z.B. sichergestellt werden durch lange Ansaugwege für die Luftzuführung, die gleichzeitig große Querschnitte und ggf. auch Umlenkungen des Luftstromes aufweist. Bei einer derartig gestalteten Motorraumabdeckung als Kapsel ist eine Vorderfront vorgesehen, die mindestens teilweise offen als Lufteintrittsöffnung zum Motorraum ausgebildet ist. Darüber hinaus sind Stege im Raum zwischen den doppelt vorgesehenen Wänden vorgesehen, die die Luftzuführung zum Motorraum in je einen Einzelluftstrom unterteilen und ihn in verschiedene Raumbereiche des Motorraumes führen. Somit kann gleichzeitig sichergestellt werden, daß die Motorraumabdeckung als Bauteil festigkeitsversteift wird.

Eine besonders vorteilhafte Ausgestaltung kann darin bestehen, daß ein Steg etwa in der Längsmittelachse des Fahrzeuges verlaufend vorgesehen wird und eine 2-kanalige Luftstromführung analog zur DE-C 39 01 658 zum Motorraum darstellt. Weitere motorraumseitig, d.h. zumindest an der inneren der doppelt vorgesehen Wände oder aber auch an den Innenseiten der übrigen Wände angelenkter weiterer Stege können zusätzliche raumteilende und stützende Funktionen wahrnehmen.

Die Gesamtsteifigkeit der Kapsel läßt sich letztendlich dadurch erhöhen, daß mindestens Teile davon konkave Formgestaltungen aufweisen, die durch Einbuchtungen allgemein oder durch terrassenförmig nach innen abgesetzte geometrische Formen verwirklicht werden können.

Eine überwiegend trapezförmige Gestaltung der Motorraumabdeckung, insbesondere der Rückfront, kann aufgrund ihrer vorteilhaften Schallwinkel eine weiterhin geräuschdämpfende Wirkung zeigen. Eine konstruktiv einfach und damit vorteilhafte Ausführung ist dadurch gegeben, daß die Deckenwand der Motorraumabdeckung überwiegend in einer Ebene, d.h. flach ausgeführt ist und dabei eine Rechteckform aufweist.

Neben der geräuschdämpfend ausgeführten Luftzuführeinrichtung ist darüber hinaus auch die Abluftführung geräuschdämpfend vorgesehen. Dies kann sowohl durch Formgebung eines geschlossenen langen kanalartigen Schallweges in Verbindung mit entsprechenden schalldämmenden Bauteilen geschehen als auch durch den Einbau von schalldämmenden wandartigen Gebilden (Schallbarrieren), z.B. von Stegen in der Abluftführung. Dabei ist es leicht möglich, nicht den gesamten Raum zwischen den sich überlappenden Bodenteilen, sondern diesen nur teilweise als Abluftführung auszubilden, d.h. für diesen Zweck zu nutzen, wie auch diesen in Abluftteilführungen hinsichtlich des darin strömenden Mediums zu unterteilen oder letztlich nur Abschnitte der gesamten Führung mit besonderen schalldämmenden Maßnahmen zu versehen. Dazu gehören insbesondere Strömungsumlenkungs- und Strömungsverwirbelungsmaßnahmen, die gleichzeitig auch schalldämpfend wirken. In hervorragender Weise kann hier der Einsatz von elastischem Material für derartige Barrieren verwirklicht werden.

Als weiterhin vorteilhaft ist anzumerken, daß vorzugsweise der Rückbodenteil des Motorraumbodens zumindest zweigeteilt ausgebildet ist, wobei einer der Teile relativ gegenüber dem anderen bewegbar ausgebildet ist. Durch diese Maßgabe kann beispielsweise eine Baumaschine, wie ein Radlader, in verkehrsberuhigten Zonen, im Bereich von Altersheimen oder Krankenhäusern noch geräuschärmer betrieben werden, da in eingefahrenem Zustand des beweglichen Teiles lediglich eine vom Querschnitt relativ kleine Austrittsöffnung am Abschluß der Abluftführung verbleibt. Die Betätigung des bewegbaren Teiles erfolgt vorzugsweise über mindestens einen im Bereich der Abluftführung angeordneten Thermostaten, der den bewegbaren Teil erst bei erhöhten Temperaturen im Motorraum bzw. der Abluftführung betätigt und bei abgesenkter Temperatur die so entstandene zusätzliche Öffnung wieder verschließt. Da die Baumaschine im wesentlichen ausschließlich bei Überlandfahrten erhöhte Temperaturen im Motorraum erzeugt, kann in fast allen anderen Betriebszuständen mit geschlossenem Rückbodenteil gefahren und somit eine noch bessere Geräuschdämpfung erreicht werden.

Letztlich hat es es sich auch als besonders vorteilhaft erwiesen zu vermeiden, daß die Umwelt einer direkten Beschallung ausgesetzt wird, wobei zur Vermeidung dessen die Schallaustrittsöffnung über den Weg der Abluftführung aus dem Motorraum entweder in Fahrtrichtung gesehen nach vorne oder aber in Richtung des Erdbodens nach unten ausgebildet werden kann.

Unter Einsatz des Erfindungsgegenstandes bei Erdbewegungsmaschinen, insbesondere bei Radladern, kann der Geräuschpegel beträchtlich gesenkt werden. So sind zum Beispiel Außenmeßwerte von 95 dB(A) und Kabinenmeßwerte von 72 dB(A) und weniger realisierbar. Diese Meßwerte setzen neue Maßstäbe bei der Geräuschreduzierung von Baumaschinen und liegen derzeit weit unter den in der entsprechenden EWG-Norm vorgegebenen Richtwerten.

Die Erfindung ist anhand eines Ausführungsbeispieles in der Zeichnung dargestellt und wird wie folgt beschrieben. Es zeigen:
- Figur 1 -: Radlader mit seinem hervorgehobenen Antriebsaggregat, insbesondere dem Motorraumrahmen und der durchbrechnungsfreien Motorraumabdeckung
- Figur 2 -: Seitenansicht der Motorraumabdeckung gemäß Figur 1 im Schnitt
- Figur 3 -: Schnitt entlang der Punkte G-H-I-K gemäß Figur 2
- Figur 4 -: Draufsicht entlang der Schnittlinie der Punkte A und B gemäß Figur 3
- Figur 5 -: Schnittdarstellung entlang der Punkte E und F gemäß Figur 3
- Figur 6 -: weitere Seitenansicht der Motorraumabdeckung gemäß Figur 1 im Schnitt, insbesondere des Motorraumes in Verbindung mit der Abluftführung
- Figur 7 -: weitere alternative Seitenansicht der Motorraumabdeckung gemäß Figur 1 im Schnitt, insbesondere des Motorraumes mit der Abluftführung
- Figur 8 -: weitere alternative Seitenansicht des Laders gemäß Figur 1 im Schnitt, insbesondere des Motorraumes mit der Abluftführung
- Figur 9 -: Schnitt entsprechend den Punkten C und D gemäß Figur 8
- Figur 10 -: vergleichbare Schnittdarstellung zu Figur 9 mit nur teilweise als Zwischenraum ausgebildeter Abluftführung
- Figur 11 -: weitere alternative Seitenansicht der Motorraumabdeckung gemäß Figur 1 im Schnitt, insbesondere des Motorraumes mit modifizierter Abluftführung.

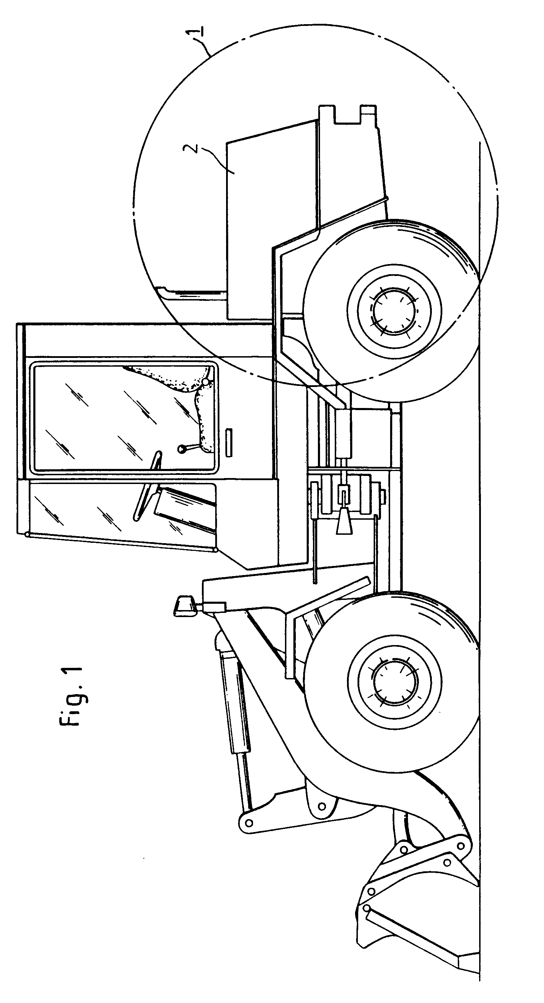

Figur 1 zeigt einen Radlader mit seinem hervorgehobenen Antriebsaggregat, insbesondere dem als Kapsel 1 ausgebildeten Motorraumrahmen und der durchbrechungsfreien Motorraumabdeckung 2 als Strich.

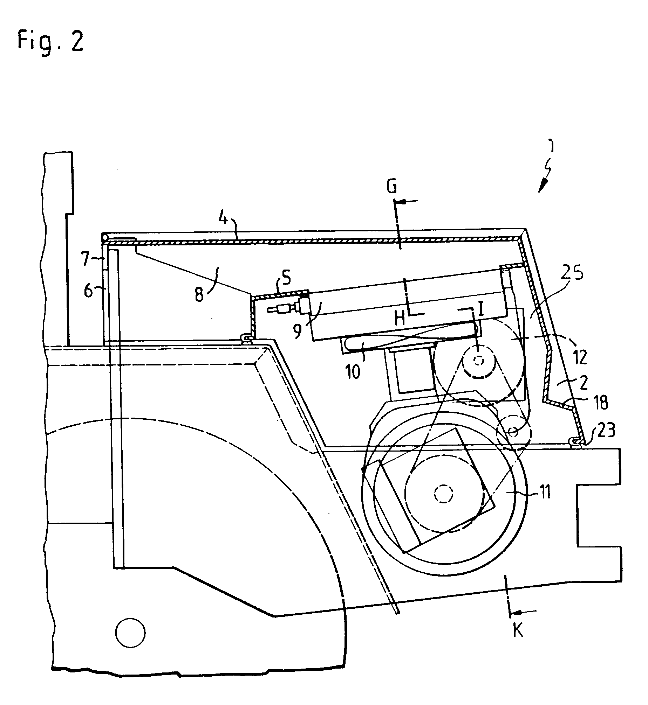

Figur 2 zeigt in Schnittdarstellung eine Seitenansicht, insbesondere der Kapsel 1. Es ist beim Ausführungsbeispiel die Deckenwand zumindest teilweise doppelwandig durch die Außendeckenwand 4 und die Innendeckenwand 5 dargestellt. Der Raum 8 zwischen den doppelten Abdeckungswänden 4 und 5 dient als Luftzuführung zum Motorraum 25 durch die Lufteintrittsöffnung 6 der Vorderfront 7 der Motorraumabdeckung 2. Es sind ferner ein Ölkühler 9 und ein Lüfter 10 eingezeichnet. Erkennbar sind gleichzeitig der Antriebsmotor 11 und der Motorlüfter 12. Die Figur 2 verdeutlicht außerdem den langen Ansaugweg der Luft für den Motorraum 25 als eine mögliche schalldämmende Maßnahme.

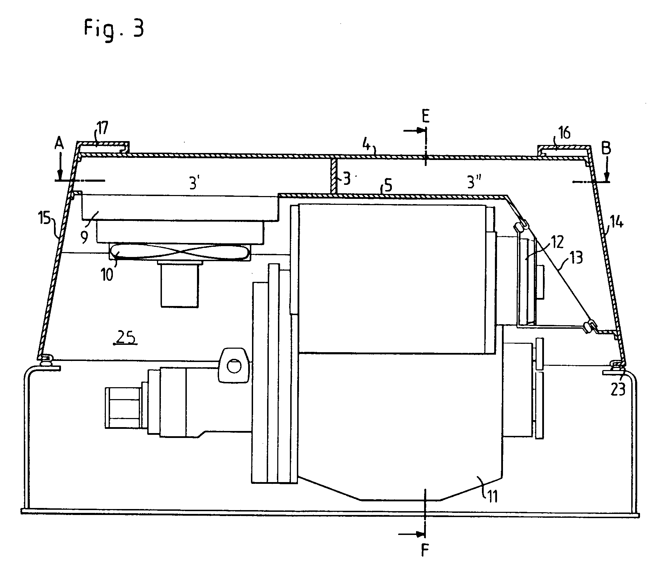

Figur 3 zeigt als Darstellung einen Schnittes entlang der Punkte G-H-I-K gemäß Figur 2 zusätzlich, daß ein Mittelsteg 3 etwa in der Längsmittelachse des Fahrzeuges verlaufend vorgesehen ist und eine zwei-kanalige Luftstromzuführung 3',3'' zum Motorraum 25 darstellt. Die Luftstromführung erfolgt zum einen durch den Ölkühler 9 und den Lüfter 10 und zum anderen durch einen Ausbruch 13 in der Innendeckenwand 5 und über den Motorlüfter 12. Diese Darstellung läßt weiterhin die Seitenwände 14 und 15 hervortreten. Ohne Einschränkung des Erfindungsgegenstandes können auf der Außendeckenwand 4 Versteifungselemente 16 und 17 vorgesehen werden.

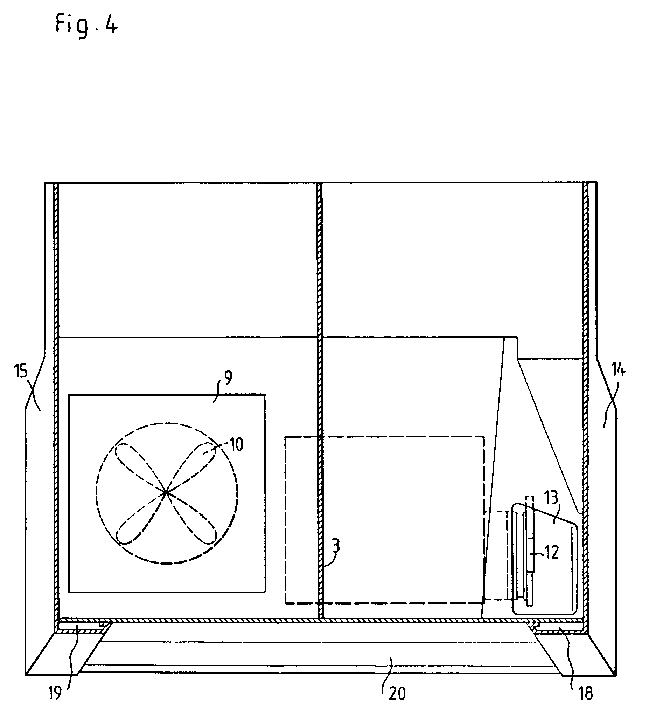

Die Figur 4 zeigt in Schnittdarstellung eine Draufsicht entlang der Schnittlinie der Punkte A und B gemäß Figur 3. Deutlich erkennbar sind der Ausbruch 13 in der Innendeckenwand 5 und durch ihn hindurch ferner der Motorlüfter 12. Genauer zeigt sich auch der Verlauf des Mittelsteges 3 und es geht aus dieser Figur 4 hervor, daß mindestens Teile der Motorraumabdeckung, hier Teile der Rückfront 20, durch eine geometrisch terrassenförmige Einbuchtung zur Versteifung der Abdeckungsfläche beitragen. Zur Verdeutlichung dieser konstruktiven Gestaltung sei auch auf die Schnittdarstellung der Rückfront 20 gemäß Figur 2 Bezug genommen.

Ohne Einschränkung des Erfindungsgegenstandes können nahe der Außenkante der Rückfront ebenfalls Versteifungselemente 18 und 19 vorgesehen werden.

Die Lage des Ölkühlers 9 in der Innendeckenwand 5 wird durch diese Figur ebenfalls verdeutlicht.

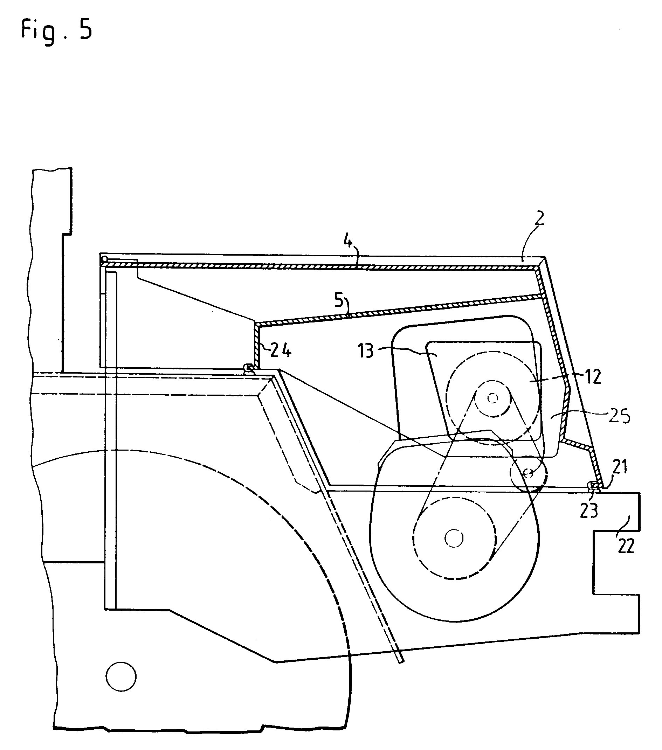

Figur 5 hebt als Schnittdarstellung entlang der Punkte E und F gemäß Figur 3 die Form des Ausbruches 13 als Luftzuführung zum Motorlüfter 12 hervor. Aus dieser Figur wird weiterhin die Eigenschaft der Innendeckenwand 5 als Doppelwand zur Außendeckenwand 4 deutlich. Wie bereits auch in Figur 2 dargestellt, ist die Unterwandkante 21 der Motorraumabdeckung 2 gegenüber dem Motorraumchassis 22 durch elastisches Material 23 geräuschdämmend abgedichtet ist.

Es ist schließlich der zur Fahrzeuglängsrichtung quer verlaufende Stützsteg 24 aus der Zeichnung zu erkennen, der sowohl den Motorraum 25 z.B. gegenüber weiteren Energievorrats- oder Antriebsaggregaten raumteilend begrenzt und/oder für die Motorabdeckung versteifend wirkt. Vergleichbare Stützstege können darüber hinaus motorraumseitig, d.h. an der Innendekkenwand 5 oder auch an den übrigen Wänden, z.B. Seltenwänden 14 und 15, vorgesehen werden.

Die Erfindung wird nicht dadurch eingeschränkt, daß z.B. als Teil des Auspuffes des Motors ein Abluftstutzen bzw. sein Abluftschalldämpfer durch die Motorraumabdeckung, insbesondere die Deckenwand geführt ist, weil dabei manschettenartige, gewisse Bewegungsfreiheiten erlaubende schalldämmende Abdeckungen zum Einsatz kommen können.

Es liegt auch im Rahmen der Erfindung, daß bei mindestens teilweise doppelwandiger Abdeckung seitlich begrenzte Stege in der Funktion von Seitenwänden eine kanalartige Luftführung zum Motorraum darstellen. Ein derartiges rechteckiges Profil kann auch durch abgerundete Profilgebung, z.B. mindestens teilweise halbrunde Profilausführung, ersetzt sein. Auch derartige Ausbildungen der Luftzuführung machen von dem Grundgedanken der Erfindung Gebrauch, die Luftzuführung zum Motorraum geräuschgedämmt, weil über lange Schallwege mit angemessenem Querschnitt, geführt auszubilden.

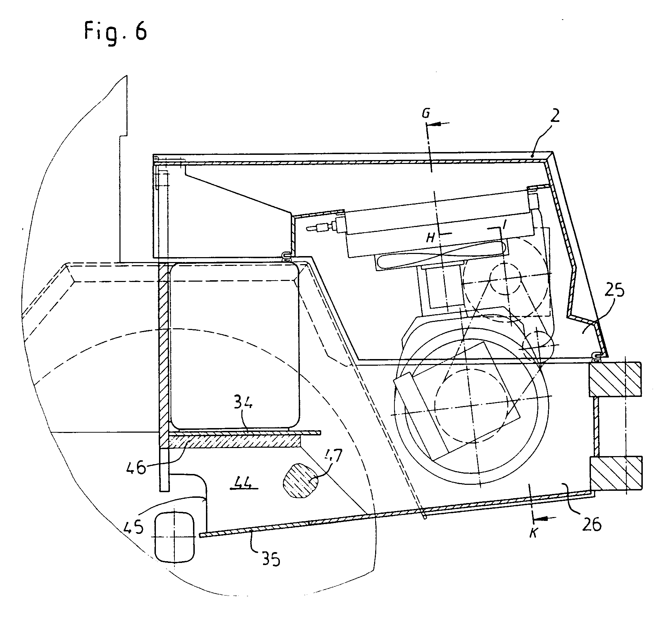

Figur 6 zeigt eine weitere Seitenansicht der Motorraumabdeckung 2 gemäß Figur 1 im Schnitt, wobei die gleichen Bauteile, wie in Figur 2 dargestellt und beschrieben, vorhanden sind. Darüber hinaus ist die Abluftführung 44 im unteren Bereich des Motorraumes 25 dargestellt, die in diesem Fall durch zwei Abschnitte, wie den Vorderbodenteil 34 und den Rückbodenteil 35 als Motorraumboden, gebildet wird. Vorderbodenteil 34 und Rückbodenteil 35 verlaufen etwa horizontal und etwa parallel zueinander und überlappen sich teilweise. In Verbindung mit den Seitenwänden 26 stellen sie einen kanalartigen Zwischenraum dar, der als Abluftführung 44 vom Motorraum 25 nach außen dient. Die Austrittsöffnung 45 der Abluftführung 44 ist hierbei, in Fahrtrichtung gesehen, nach vorne ausgebildet. Im Bereich des Vorderbodenteiles 34 sind kanalseitig schalldämmende Matten 46 angebracht. Gleiches gilt für die Seitenwände 26, was durch das Bezugszeichen 47 angedeutet wird.

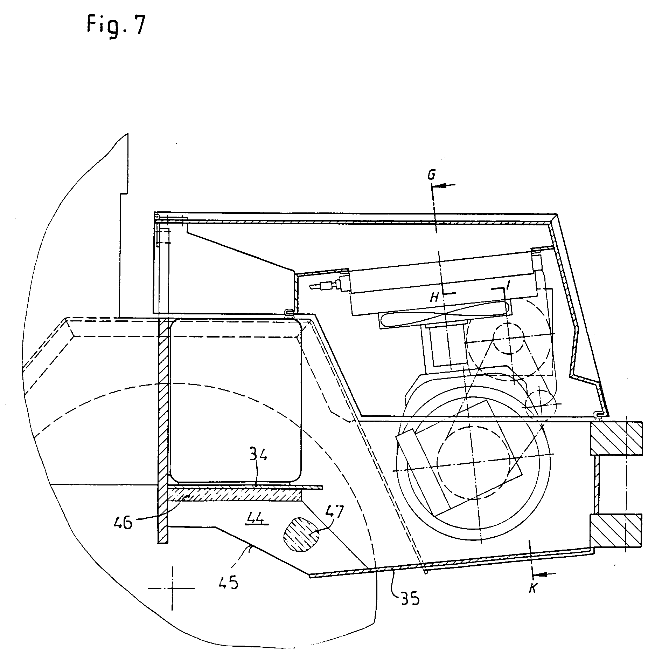

Figur 7 zeigt eine ähnliche Ausgestaltung wie Figur 6, mit dem Unterschied, daß die Austrittsöffnung 45 der Abluftführung 44 im wesentlichen in Richtung des Erdbodens nach unten gerichtet ist, wobei die Überlappung von Vorderbodenteil 34 und Rückbodenteil 35 hier nicht so stark ist, wie in Figur 6 dargestellt. Die schalldämmenden Materialien 46 und 47 sind jedoch auch hier vorgesehen.

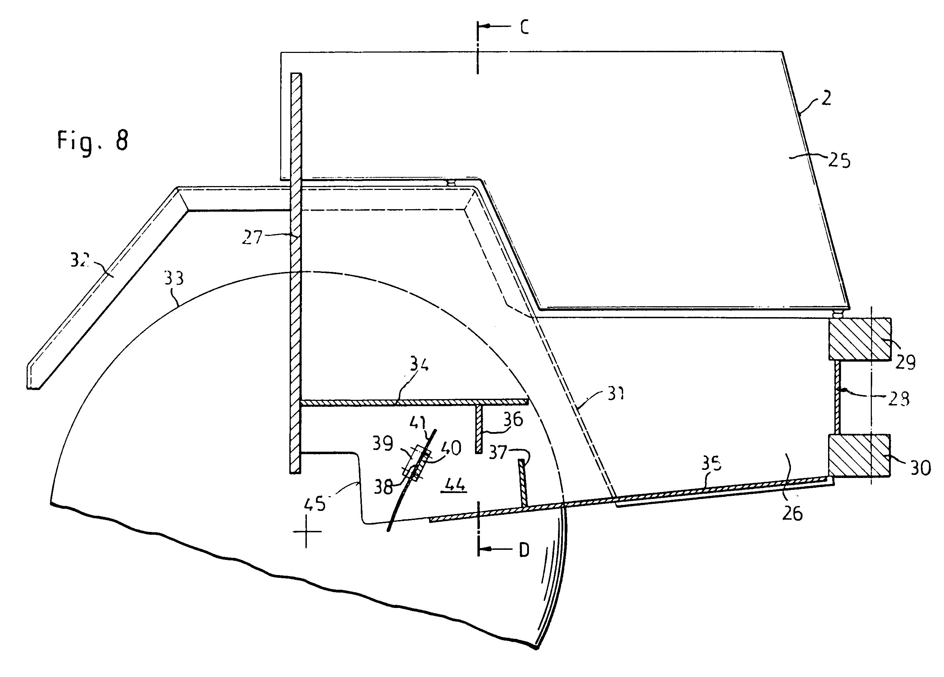

Figur 8 zeigt eine weitere Seitenansicht der Motorraumabdeckung 2 gemäß Figur 1, insbesondere des Motorraumes 25. Sein oberer Bereich ist abgeschirmt durch die in den Figuren 2 bis 5 beschriebene Motorraumabdeckung 2 und im unteren Bereich sind Seitenwände 26 vorgesehen. Die Stützwand 27 und die Rückfront 28 einschließlich der an ihr befestigten Gegengewichte 29 und 30 wie auch die Zwischenwand 31 ergänzen die Motorraumbegrenzung. Verdeutlichend sind in Figur 8 auch noch der Kotflügel 32 und das Rad 33 eingetragen.

Darüber hinaus zeigt die Darstellung nun, daß der Motorraumboden, wie bereits in den Figuren 6 und 7 beschrieben, aufgeteilt ist in mehrere Abschnitte, wie den Vorderbodenteil 34 und Rückbodenteil 35, die in mehr als einer Ebene, vorwiegend in zwei Ebenen, angeordnet sind und die sich teilweise überlappen, ansonsten jedoch im wesentlichen horizontal verlaufen. Unter Einbeziehung ihrer seitlichen Begrenzungen je einer Seitenwand 26 stellen sie einen kanalartigen Zwischenraum 44 dar, der als Abluftführung mit einer Austrittsöffnung 45 überwiegend in Fahrzeuglängsrichtung ausgebildet ist.

Zur Beeinflussung des Strömungsmediums der Motorraumabluft sowohl hinsichtlich seines Weges als auch seines physikalischen Zustandes, z.B. seiner Schalleigenschaft, sind Schallbarrieren, z.B. Stege 36,37 in der Abluftführung vorgesehen. In der Abbildung ist weiterhin der Umlenksteg 38 zwischen den Seitenwänden 26 zu erkennen. Er ist aus zwei Metallprofilen 39 und 40 aufgebaut, zwischen denen ein bandartiges elastisches Material 41 befestigt ist und die Abluftführung 44 hineinragt. Dieses Bauteil aus Metallprofilen 39,40 und elastischem Material 41 in der Abluftführung 44 lenkt sowohl das Strömungsmedium, die Motorraumabluft um, hier nach unten in Richtung des Erdbodens, als wirkt es auch durch die Energieaufnahme schalldämpfend.

Im einzelnen nicht aufgezeigt, aber leicht vorstellbar und innerhalb des Erfindungsgedankens liegend sind Anordnungen mit einer Mehrzahl der vorbeschriebenen Bauteile in der Abluftführung und mit gleichartigen Funktionen. Dies trifft auch für nicht nur quer zur Strömungsrichtung vorgesehene Stege zu, sondern auch für solche, die überwiegend in Strömungsrichtung angeordnet sind und Umlenkfunktionen und/oder schalldämpfende Wirkung haben. Darüber hinaus können ergänzend an den Seitenwänden und/oder Bodenabschnitten schalldämmende Materialien vorgesehen werden.

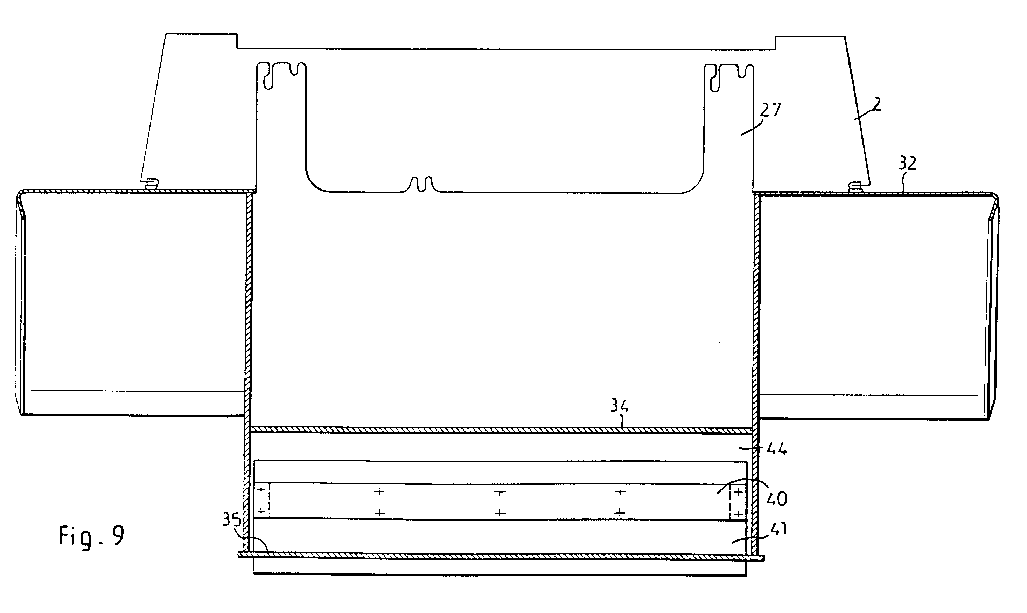

Figur 9 zeigt entlang der Schnittlinie zwischen den Punkten C und D gemäß Figur 8 eine Ansicht in Schnittdarstellung des Erfindungsgegenstandes. Deutlich erkennbar ist in dieser Darstellung, daß der Vorderbodenteil 34 und der Rückbodenteil 35 in verschiedenen horizontalen Ebene liegen und in den sich überlappenden Bereichen den Zwischenraum 44, nämlich die Abluftführung, bilden. Verdeutlicht wird weiterhin, daß der Umlenksteg 38 erkennbar ist mit seinem Metallprofil 40 und dem bandartigen elastischen Material 41, der im Weg des Strömungsmediums der Motorraumabluft vorgesehen ist.

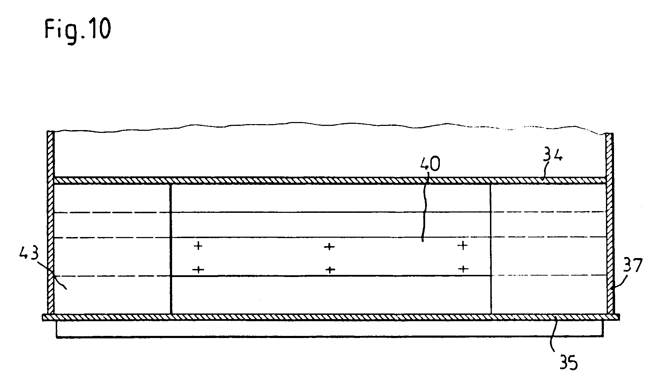

Schließlich zeigt die Figur 10 als Ansicht in vergleichbarer Schnittdarstellung zur Figur 9 eine Darstellung, bei der nur teilweise infolge vorgesehener Schallkörper 43 der Zwischenraum zwischen dem Vorderbodenteil 34 und Rückbodenteil 35 als Abluftführung ausgebildet ist. Die vorstehend beschriebene, mindestens teilweise doppelwandig ausgeführte Motorraumbodenbegrenzung mit gleichzeitiger Nutzung des Zwischenraumes zwischen den Bodenteilen für Schalldämmungsmaßnahmen führt zu einer erheblichen Minderung der Geräusche der Antriebsaggregate für die Umwelt.

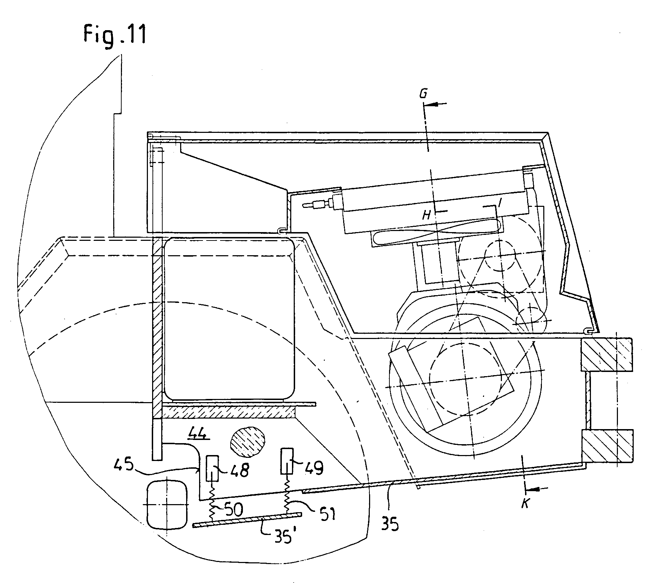

Figur 11 zeigt eine weitere Alternative der Abluftführung 44, wobei die Austrittsöffnung 45, in Fahrtrichtung gesehen, nach vorne gerichtet ist. Darüber hinaus ist der als Rückbodenteil ausgebildete Abschnitt 35 zweigeteilt 35'. Der Teil 35' des Rückbodenteiles 35 wird über Thermostate 48,49, die im Bereich der Abluftführung 44 angeordnet sind sowie über elastische Stellelemente 50,51 temperaturabhängig aus- bzw. eingefahren, wobei in eingefahrenem Zustand des Teiles 35' eine weitere Geräuschreduzierung erzielt werden kann, da die Austrittsöffnung 45 dann einen reduzierten Querschnitt aufweist.

## Patentansprüche

1. Erdbewegungsmaschine, insbesondere Radlader, mit einem Antriebsaggregat (11), das von einer zumindest teilweise zu öffnenden, durch mehrere Begrenzungswände gebildeten Kapsel (1) umgeben ist, in deren innerem Bereich mindestens eine kanalartig ausgebildete schallgedämpfte Luftzuführeinrichtung (8) sowie mindestens eine ebenfalls kanalartig ausgebildete schallgedämpfte Abluftführung (44) vorgesehen ist, dadurch gekennzeichnet, daß
- das im rückwärtigen Bereich der Erdbewegungsmaschine vorgesehene Antriebsaggregat (11) durch eine Motorraumabdeckung (2) abgeschlossen ist,
- die die Luftzuführeinrichtung (8) bildende deckenseitige Begrenzungswand (4,5) der Motorraumabdeckung (2) zum Motorraum (25) hin doppelwandig ausgeführt ist, und
- der die Kapsel (1) unten abschließende Motorraumboden aus mindestens zwei sich mindestens teilweise überlappenden, etwa horizontal verlaufenden Abschnitten (34,35) gebildet ist, wobei die Austrittsöffnung (45) der Abluftführung (44) unterhalb des Antriebsaggregates (11), in Fahrtrichtung der Erdbewegungsmaschine gesehen, nach vorne und/oder motorbodenseitig nach unten vorgesehen ist.

2. Erdbewegungsmaschine nach Anspruch 1, dadurch gekennzeichnet, daß die Vorderfront (7) der Motorraumabdeckung (2) mindestens teilweise offen als Lufteintrittsöffnung (6) zum Motorraum (25) hin ausgebildet ist, und daß Stege (3) im Bereich der deckenseitigen Begrenzungswand (4,5) vorgesehen sind, mittels derer die Luftzuführung (8) in mehrere Einzelluftströme (3',3'') für verschiedene Motorraumbereiche unterteilbar ist.

3. Erdbewegungsmaschine nach den Ansprüchen 1 und 2, dadurch gekennzeichnet, daß die Unterkanten (21) der Motorraumabdeckung (2) gegenüber dem Motorraumchassis (22) durch elastische Materialien (23) geräuschdämmend abgedichtet sind.

4. Erdbewegungsmaschine nach den Ansprüchen 1 bis 3, dadurch gekennzeichnet, daß die Motorraumabdeckung (2) motorraumseitig mit raumteilenden Stützstegen ausgebildet ist.

5. Erdbewegungsmaschine nach den Ansprüchen 1 bis 4, dadurch gekennzeichnet, daß zumindest Teile der Motorraumabdeckung (2) durch konkave Formgestaltung versteift sind.

6. Erdbewegungsmaschine nach den Ansprüchen 1 bis 5, dadurch gekennzeichnet, daß der Bereich der Abluftführung (44) mit schalldämpfenden Materialien (46,47) bestückt ist.

7. Erdbewegungsmaschine nach den Ansprüchen 1 bis 6, dadurch gekennzeichnet, daß mindestens einer der Abschnitte (35) im Bereich der Abluftführung (44) zweigeteilt ausgebildet und der eine (35') gegenüber dem anderen Teil (35) relativ bewegbar ist.

8. Erdbewegungsmaschine nach den Ansprüchen 1 bis 7, dadurch gekennzeichnet, daß der untere Abschnitt (35) zweigeteilt ausgebildet ist.

9. Erdbewegungsmaschine nach den Ansprüchen 1 bis 8, dadurch gekennzeichnet, daß der, in Fahrtrichtung gesehen, vordere Teil (35') des unteren Abschnittes (35) nach unten bewegbar ist.

10. Erdbewegungsmaschine nach den Ansprüchen 1 bis 9, dadurch gekennzeichnet, daß der bewegbare Teil (35') thermostatgesteuert nach unten bewegbar ist.

11. Erdbewegungsmaschine nach den Ansprüchen 1 bis 10, dadurch gekennzeichnet, daß mindestens ein Thermostat (48,49) im Bereich der Abluftführung (44) angeordnet ist und den bewegbaren Teil (35') temperaturabhängig betätigt.

12. Erdbewegungsmaschine nach den Ansprüchen 1 bis 11, dadurch gekennzeichnet, daß im Bereich der etwa horizontal verlaufenden Abschnitte (34,35) der Abluftführung (44) etwa vertikal sich erstreckende Schallbarrieren (36,37) vorgesehen sind.

13. Erdbewegungsmaschine nach Anspruch 12, dadurch gekennzeichnet, daß die Schallbarrieren (36,37) stegförmig ausgebildet sind und von beiden Abschnitten (34,35) ausgehend aufeinander zu verlaufen.

14. Erdbewegungsmaschine nach den Ansprüchen 12 und 13, dadurch gekennzeichnet, daß die Stege (36,37), in Fahrtrichtung gesehen, einen vorgegebenen Abstand zueinander aufweisen.

15. Erdbewegungsmaschine nach den Ansprüchen 1 bis 14, dadurch gekennzeichnet, daß die Abluftführung (44), in Strömungsrichtung gesehen, hinter den Stegen (36,37) mindestens einen Umlenksteg (38) aufweist.

16. Erdbewegungsmaschine nach den Ansprüchen 1 bis 15, dadurch gekennzeichnet, daß der Umlenksteg (38) aus mindestens zwei Metallprofilen (39,40) aufgebaut ist.

17. Erdbewegungsmaschine nach den Ansprüchen 1 bis 16, dadurch gekennzeichnet, daß zwischen den Metallprofilen (39,40) ein länglich ausgebildetes, elastisch verformbares Band (41) vorgesehen ist.

## Claims

1. Earthmoving machine, especially a wheeled loader, with a drive unit (11) surrounded by an encapsulation (1) which is to be opened at least in part and is formed by a plurality of boundary walls, and in the inner region of which at least one channel-like sound-damped air infeed device (8) and also at least one likewise channel-like sound-damped exhaust air duct (44) is provided, characterized in that
- the drive unit (11) provided in the rearward region of the earthmoving machine is closed off by means of a cover (2) for the engine chamber,
- the covering boundary wall (4, 5), forming the air infeed device (8), of the cover (2) for the engine chamber, is of double-walled construction as it nears the engine chamber (25), and
- the engine chamber floor closing off the encapsulation (1) underneath is formed of at least two portions (34, 35) which at least partially overlap each other and extend approximately horizontally, the outlet opening (45) of the exhaust air duct (44) being provided beneath the drive unit (11), seen in the direction of travel of the earthmoving machine, towards the front and/or downwards on the engine floor side.

2. Earthmoving machine according to Claim 1, characterized in that the front part (7) of the engine chamber cover (2) is arranged to be, at least in part, open as air inlet opening (6) to the engine chamber (25), and that ribs (3) are provided in the region of the covering boundary wall (4, 5), by means of which ribs the air infeed (8) can be divided into a plurality of individual air streams (3', 3'') for different regions of the engine chamber.

3. Earthmoving machine according to Claims 1 and 2, characterized in that the lower edges (21) of the engine chamber cover (2) are sealed, with respect to the engine chamber frame (22), so as to deaden sound, by means of resilient materials (23).

4. Earthmoving machine according to Claims 1 to 3, characterized in that the engine chamber cover (2) is provided on the engine chamber side with space-dividing support ribs.

5. Earthmoving machine according to Claims 1 to 4, characterized in that at least parts of the engine chamber cover (2) are stiffened by means of concave shaping.

6. Earthmoving machine according to Claims 1 to 5, characterized in that the region of the exhaust air duct (44) is fitted with sound-damping materials (46, 47).

7. Earthmoving machine according to Claims 1 to 6, characterized in that at least one of the portions (35), in the region of the exhaust air duct (44), is divided into two parts, and one part (35') is movable relative to the other part (35).

8. Earthmoving machine according to Claims 1 to 7, characterized in that the lower portion (35) is divided into two parts.

9. Earthmoving machine according to Claims 1 to 8, characterized in that the front part (35'), seen in the direction of travel, of the lower portion (35) is downwardly movable.

10. Earthmoving machine according to Claims 1 to 9, characterized in that the movable part (35') is movable downwards under thermostat control.

11. Earthmoving machine according to Claims 1 to 10, characterized in that at least one thermostat (48, 49) is arranged in the region of the exhaust air duct (44) and actuates the movable part (35') according to temperature.

12. Earthmoving machine according to Claims 1 to 11, characterized in that in the region of the portions (34, 35) of the exhaust air duct (44) which extend approximately horizontally there are provided acoustic barriers (36, 37) extending approximately vertically.

13. Earthmoving machine according to Claim 12, characterized in that the acoustic barriers (36, 37) are rib-like in construction and extend towards one another, starting from both portions (34, 35).

14. Earthmoving machine according to Claims 12 and 13, characterized in that the ribs (36, 37), seen in the direction of travel, are at a predetermined distance from each other.

15. Earthmoving machine according to Claims 1 to 14, characterized in that the exhaust air duct (44), seen in the direction of flow, has behind the ribs (36, 37) at least one deflecting rib (38).

16. Earthmoving machine according to Claims 1 to 15, characterized in that the deflecting rib (38) is built up of at least two metal profiles (39, 40).

17. Earthmoving machine according to Claims 1 to 16, characterized in that between the metal profiles (39, 40) an elongate, resiliently deformable strip (41) is provided.

## Revendications

1. Engin de terrassement, notamment chargeuse sur roues, avec un ensemble d'entraînement (11) entouré par un blindage (1) pouvant être au moins partiellement ouvert, formé par plusieurs cloisons de délimitation et à l'intérieur duquel sont prévus au moins un dispositif d'admission d'air (8) insonorisé, conçu du genre canal, ainsi qu'au moins un guidage d'air d'évacuation (44) insonorisé, également conçu du genre canal, **caractérisé** en ce que
- l'ensemble d'entraînement (11), prévu à l'arrière de l'engin de terrassement, est entouré par un capot (2) de compartiment-moteur,
- la cloison de délimitation supérieure (4, 5) du capot (2) de compartiment-moteur, laquelle forme le dispositif d'admission d'air (8), est réalisée à double paroi en direction du compartiment-moteur (25), et
- le fond du compartiment-moteur, qui ferme le blindage (1) vers le bas, est constitué d'au moins deux parties (34, 35) s'étendant approximativement horizontalement et se chevauchant au moins partiellement, l'ouverture de sortie (45) du guidage d'air d'évacuation (44) étant prévue, en aval de l'ensemble d'entraînement (11) considérée dans la direction de marche de l'engin de terrassement, vers l'avant et/ou vers le bas, du côté du fond moteur.

2. Engin de terrassement selon la revendication 1, **caractérisé** en ce que la partie frontale avant (7) du capot (2) de compartiment-moteur est conçue au moins partiellement ouverte, comme ouverture d'entrée d'air (6) vers le compartiment-moteur (25), et en ce que des entretoises (3) sont prévues dans la région de la cloison de délimitation supérieure (4, 5), au moyen desquelles le dispositif d'admission d'air (8) peut être divisé en plusieurs flux d'air séparés (3', 3'') pour différentes régions du compartiment-moteur.

3. Engin de terrassement selon la revendication 1 ou 2, **caractérisé** en ce que le bord inférieur (21) du capot (2) de compartiment-moteur est acoustiquement isolé du châssis (22) du compartiment-moteur par un matériau élastique (23).

4. Engin de terrassement selon l'une des revendications 1 à 3, **caractérisé** en ce que le capot (2) de compartiment-moteur est doté, du côté du compartiment-moteur, d'entretoises de soutien divisant ledit compartiment.

5. Engin de terrassement selon l'une des revendications 1 à 4, **caractérisé** en ce qu'au moins des parties du capot (2) de compartiment-moteur sont renforcées par une configuration concave.

6. Engin de terrassement selon l'une des revendications 1 à 5, **caractérisé** en ce que la région du guidage d'air d'évacuation (44) est pourvue de matériaux insonorisants (46, 47).

7. Engin de terrassement selon l'une des revendications 1 à 6, **caractérisé** en ce qu'au moins une (35) des parties du guidage d'air d'évacuation (44) est réalisée en deux éléments, dont l'un (35') peut être déplacé par rapport à l'autre (35).

8. Engin de terrassement selon l'une des revendications 1 à 7, **caractérisé** en ce que la partie inférieure (35) est réalisée en deux éléments.

9. Engin de terrassement selon l'une des revendications 1 à 8, **caractérisé** en ce que l'élément avant (35'), considéré dans la direction de marche, de la partie inférieure (35) peut être déplacé vers le bas.

10. Engin de terrassement selon l'une des revendications 1 à 9, **caractérisé** en ce que l'élément mobile (35') peut être déplacé vers le bas sous la commande d'un thermostat.

11. Engin de terrassement selon l'une des revendications 1 à 10, **caractérisé** en ce qu'au moins un thermostat (48, 49) est disposé dans la région du guidage d'air d'évacuation (44) et actionne l'élément mobile (35') en fonction de la température.

12. Engin de terrassement selon l'une des revendications 1 à 11, **caractérisé** en ce que des barrières acoustiques (36, 37) s'étendant approximativement verticalement sont prévues dans la région des parties (34, 35) du guidage d'air d'évacuation (44) qui s'étendent approximativement horizontalement.

13. Engin de terrassement selon la revendication 12, **caractérisé** en ce que les barrières acoustiques (36, 37) sont réalisées sous forme de nervures et s'étendent l'une vers l'autre en partant des deux parties (34, 35).

14. Engin de terrassement selon la revendication 12 ou 13, **caractérisé** en ce que les nervures (36, 37) présentent, considérées dans la direction de marche, un espacement mutuel prédéterminé.

15. Engin de terrassement selon l'une des revendications 1 à 14, **caractérisé** en ce que le guidage d'air d'évacuation (44) présente, en arrière des nervures (36, 37) dans la direction d'écoulement, au moins une nervure déflectrice (38).

16. Engin de terrassement selon l'une des revendications 1 à 15, **caractérisé** en ce que la nervure déflectrice (38) est constituée d'au moins deux profilés métalliques (39, 40).

17. Engin de terrassement selon l'une des revendications 1 à 16, **caractérisé** en ce qu'une bande oblongue (41) élastiquement déformable est prévue entre les profilés métalliques (39, 40).
